# FASCICULE DE BREVET EUROPEEN

(11) **EP 4 055 570 B1**
(45) Date de publication et mention de la délivrance du brevet: **22.07.2026**
(21) Numéro de dépôt: 20796819.9
(22) Date de dépôt: 29.10.2020
(51) Int. Cl.: G07F 19/00, G07F 7/08, G06Q 20/32

(54) **PROCÉDÉ ET SYSTÈME DE COMMUNICATION ENTRE UN LECTEUR DE CARTE À PUCE ET UN DISPOSITIF EXTERNE**
KOMMUNIKATIONSVERFAHREN UND -SYSTEM ZWISCHEN EINEM CHIPKARTEN-LESEGERÄT UND EINER EXTERNEN VORRICHTUNG
METHOD AND SYSTEM FOR COMMUNICATION BETWEEN A SMART CARD READER AND AN EXTERNAL DEVICE

(30) Priorité: 05.11.2019 EP 19306431
(43) Date de publication de la demande: 14.09.2022
(73) Titulaire: Thales Dis France SAS, 92190 Meudon (FR)
(72) Inventeur: PALADJIAN, Pierre, 13881 GEMENOS CEDEX (FR); ZEAMARI, Ali, 13881 GEMENOS CEDEX (FR); MARTINEZ, Frédéric, 13881 GEMENOS CEDEX (FR)
(74) Mandataire: Castelo, Jérôme
(86) Numéro de dépôt international: PCT/EP2020/080368
(87) Numéro de publication internationale: WO 2021/089398

(56) Documents cités:
- EP-A1- 3 531 356
- WO-A1-2015/034552
- FR-A1- 2 793 361
- US-A1- 2019 114 623

## Description

### Domaine de l'invention.

L'invention concerne un procédé pour réaliser une transaction avec un système comprenant un terminal (ou lecteur) de transaction notamment bancaire et un dispositif personnel de transaction notamment de paiement, tel une carte à puce et pour communiquer des informations de transaction à un utilisateur pendant la transaction via un adaptateur.

Plus particulièrement, l'adaptateur peut être configuré pour recevoir, avec ou sans fil, lesdites informations et les traduire sous forme vocale ou autre forme perceptible par l'utilisateur.

L'adaptateur peut être choisi parmi notamment des dispositifs électroniques de communication (téléphone portable, tablette, PDA assistant personnel, accessoires électroniques à porter tels que des montres communicantes ou NFC).

Le dispositif personnel de transaction notamment de paiement peut être également tout support d'applications de transaction notamment de paiement ou tout dispositif de transaction notamment de paiement, dont préférentiellement représenté par une carte à puce. Certaines cartes à puce peuvent comprendre des interfaces d'utilisateur (écran, clavier, capteur biométrique...) et/ou des interfaces de communication diverses (NFC, ISO 7816, Bluetooth ^{™}...)

Ces dispositifs de transaction sont pour certains destinés à des transactions électroniques, notamment financières, telles que des achats qui peuvent être réalisés en ligne via internet sur des sites marchands, mais aussi localement chez des commerçants à l'aide d'un terminal de paiement POS (Point of Sale Terminal en terminologie anglo-saxonne), ou à l'aide de distributeurs automatiques de billets (DAB) ou ATM (Automatic Teller Machines en terminologie anglo-saxonne), de distributeurs automatiques de marchandises tels que carburant, boissons, etc., dans des restaurants d'entreprise, des magasins....

### Art antérieur.

Il a été proposé ou recommandé notamment selon des directives supra nationales d'équiper des terminaux de paiement POS avec une interface de communication autre qu'un afficheur par exemple une sortie audio ou autre pour permettre aux personnes malvoyantes d'être informées sur les données de transaction.

Le document FR2793361 A1 décrit un système de transaction électronique entre un terminal de transport et une carte à puce à contacts électriques logée dans un étui intelligent à interface sans-contact. L'étui comporte une batterie, une interface électrique pour alimenter la carte en énergie et lui transmettre des informations, une interface audio pour l'utilisateur et une interface de communication hertzienne pour effectuer la transaction électronique avec le terminal. Les informations sont reçues par la carte via son interface à contacts à travers l'étui de communication à distance placé en intermédiaire entre la carte et le terminal. L'interface de communication du terminal est de type hertzien ce qui permet notamment une communication d'information à l'utilisateur après la transaction.

### Problème technique.

Lors d'une transaction bancaire à contacts électriques ou sans-contact, l'utilisateur ne voit que les informations affichées sur le terminal de paiement POS. Cependant certaines personnes (par exemple: les malvoyants) ne sont pas en mesure de voir ces informations. Il y a donc actuellement un besoin pour informer autrement l'utilisateur sur les informations de transaction.

Le type de solution visé ci-dessus, avec interface (autre qu'un afficheur) directement sur le terminal de paiement et capable de transmettre les informations de transaction à un utilisateur, n'est pas déployé aujourd'hui et ne semble pas être pratique à déployer sur les équipements bancaires existants.

### Objectif de l'invention.

L'invention a notamment pour objectif de résoudre les inconvénients susvisés ou de satisfaire le besoin pressenti ci-dessus.

Elle cherche notamment à atteindre cet objectif en effectuant le moins de modifications techniques dans l'infrastructure matérielle ou logicielle associée actuellement déployée ou en étant le moins onéreux possible.

### Résumé de l'invention.

L'invention est définie par le jeu de revendications joint. A cet effet, l'invention a pour objet un procédé pour réaliser une transaction avec un système comprenant un terminal de transaction (notamment bancaire) et un dispositif de transaction (notamment bancaire), ledit système étant configuré pour communiquer à un utilisateur, pendant ladite transaction, des informations de transaction provenant du terminal (ou lecteur) par l'intermédiaire d'un adaptateur, ledit adaptateur étant configuré pour recevoir, avec ou sans fil, lesdites informations et les traduire sous forme vocale ou autre, lesdites informations étant obtenues ou collectées dans ou via ledit dispositif de transaction,
caractérisé en ce que ledit dispositif à puce (ou de transaction) est configuré avec une première interface de communication à contacts électriques ou radiofréquence de proximité comprise dans le dispositif pour recevoir les informations de la transaction directement d'une interface de communication du terminal.

Selon d'autres caractéristiques ou modes préférés :
- Le dispositif à puce peut être configuré avec une seconde interface de communication sans-fil intégrée pour communiquer lesdites informations à l'adaptateur ;
- La première interface du dispositif peut être conforme au standard ISO 7816 ou ISO 14443 et/ou ISO/IEC 18092 ;
- La seconde interface de communication sans fil (14, 34) peut être choisie parmi Bluetooth, WIFI, UHF, NFC, LIFI.
- Le procédé peut comprendre l'étape préférée selon laquelle, pour réaliser la transaction, le dispositif peut être présentée seul au terminal (sans appareil intermédiaire, dispositif intermédiaire, adaptateur de communication, accessoire) ou inséré seul dans ledit terminal ;
- Les informations de transaction peuvent être dérivées en parallèle de celles reçues par ledit dispositif à puce ;
- Les informations de transaction peuvent être traitées ou sélectionnées par la puce du dispositif ;
- L'adaptateur peut comprendre un téléphone mobile, une oreillette sans fil dotée d'une interface de communication adaptée à celle de l'interface de communication du dispositif personnel de transaction (ou la carte) ;
- L'adaptateur peut être choisi parmi un dispositif de l'utilisateur parmi un téléphone portable, une tablette, un assistant personnel, un accessoire électronique à porter, une montre communicantes ou NFC).
- le lecteur (ou terminal) peut comprendre un lecteur POS ou terminal bancaire ATM ;
- L'adaptateur peut comprendre une application logicielle configurée pour traduire ou transposer des informations numériques ou analogiques en informations vocales ou autre sur une interface homme / machine et inversement.
- L'application logicielle peut aussi permettre de traduire dans une langue quelconque et/ou en devise quelconque les informations reçues notamment le montant de la transaction.

L'invention a également pour objet un système correspondant au procédé ci-dessus. En particulier, elle a pour objet un système pour réaliser une transaction comprenant un terminal (ou lecteur de carte à puce) et un dispositif personnel de transaction (ou une carte à puce), ledit système étant configuré pour communiquer à un utilisateur, pendant ladite transaction, des informations de transaction provenant du terminal par l'intermédiaire d'un adaptateur, ledit adaptateur étant configuré pour recevoir, avec ou sans fil, lesdites informations et les traduire sous forme vocale ou autre, lesdites informations étant obtenues ou collectées dans ou via ledit dispositif personnel de transaction,
caractérisé en ce que ledit dispositif à puce (ou personnel de transaction) est configuré avec une première interface de communication à contacts électriques ou radiofréquence de proximité comprise dans le dispositif pour recevoir les informations de la transaction directement d'une interface de communication du terminal.

L'invention a également pour objet un dispositif personnel de transaction (tel qu'une carte à puce) pour réaliser une transaction avec un terminal selon le procédé ci-dessus, caractérisé en ce qu'il est configurée de manière à obtenir ou collecter des informations de transaction directement du terminal et les communiquer à un adaptateur associé avec lequel il est apparié.

L'invention a également pour objet un adaptateur pour la mise en œuvre du procédé ci-dessus, ledit adaptateur de transaction étant configuré pour recevoir, avec ou sans fil, des informations de transactions provenant d'un terminal (ou un lecteur) et les traduire sous forme vocale ou autre, pendant une transaction,
caractérisé en ce qu'il est apparié avec un dispositif personnel de transaction (ou carte à puce) de manière à recevoir lesdites informations de transaction d'une transaction électronique effectuée avec ledit terminal.

### Brève description des figures.

- La figure 1 illustre un système général pour réaliser des transactions selon des modes généraux de mise en œuvre du procédé de l'invention ;
- Les figures 2 et 3 illustrent respectivement un premier mode de réalisation du système de transaction ainsi qu'un exemple de fonctionnement;
- Les figures 4 et 5 illustrent respectivement un second mode de réalisation du système de transaction ainsi qu'un exemple de fonctionnement;
- Les figures 6 et 7 illustrent respectivement un troisième mode de réalisation du système de transaction ainsi qu'un exemple de fonctionnement.

### Description.

Les mêmes références d'une figure à l'autre, indiquent des constituants identiques ou similaires.

L'invention est principalement décrite en relation avec un terminal POS mais d'autres lecteurs ou terminaux sont permutables dans les différents exemples. De même, une carte à puce est permutable par tout dispositif décrit dans chacun des exemples, tel une montre NFC, un téléphone ou montre en mode émulation carte.

De même, les fonctions du téléphone et/ou de la montre ou du casque ou oreillette peuvent être permutées dans les exemples.

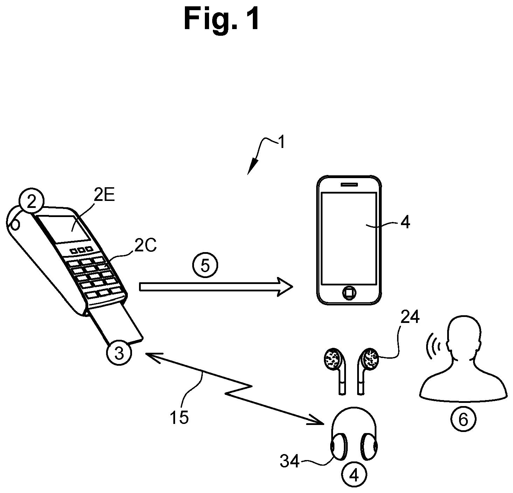

A la figure 1 est illustré un système pour réaliser une transaction selon un premier mode de mise en œuvre du procédé de l'invention.

Le système 1 peut comprendre uniquement un terminal de transaction 2 (ou lecteur de carte à puce) ou terminal de paiement POS, ainsi qu'un dispositif de transaction 3 tel une carte à puce.

Le terminal 2 peut être un ATM, une borne de paiement, un distributeur de boissons, tout appareil de transaction effectuant une transaction électronique avec un dispositif de transaction d'un utilisateur ou un dispositif de paiement associé à un téléphone (ex : iZetlle, etc.).

Selon une caractéristique, le système est configuré pour communiquer à un utilisateur, pendant la transaction, des informations de transaction provenant du terminal (ou lecteur 2) par l'intermédiaire d'un adaptateur 4.

Les informations de transactions peuvent comprendre les données affichées normalement sur un terminal de paiement, telles que le choix du moyen de paiement (carte débit, crédit), le mode de paiement (contacts ou sans-contact), le montant, les devises, la demande de validation de l'utilisateur (via code confidentiel (PIN), signature, vérification biométrique, ou autre moyen), le statut de la validation de l'utilisateur et de la transaction. Alternativement, la transaction peut être une authentification pour notamment un accès physique et/ou logique à un bâtiment à un réseau informatique, des informations affichées telles que des instructions à un utilisateur 6, (attendez, passez...), ou authentification ou validation de l'utilisateur sur un dispositif électrique ou mobile (ex : validation ou signature d'une transaction, d'une commande, d'une opération...).

Cet adaptateur 4 peut être configuré pour recevoir, avec ou sans fil, les informations 5 et les traduire sous forme vocale ou autre de manière à être compris par l'utilisateur 6. Il peut comprendre une application permettant d'apparier l'adaptateur avec la carte notamment avec des protocoles de communication sécurisés. Une fois que l'appairage est établi, le procédé de l'invention peut prévoir de chiffrer ou coder toutes les informations reçues ou du moins certaines sensibles ou confidentielles. Des clés de chiffrement (ou des secrets) ou clés secrètes peuvent être partagées entre la carte et l'adaptateur pour chiffrer ou code la communication entre eux.

Dans l'art antérieur, le système 1 peut comprendre une interface audio (non représentée) sur laquelle un utilisateur peut brancher un casque audio sur le terminal. Toutefois l'invention, prévoit une autre configuration technique décrite ultérieurement.

Dans l'exemple préféré, le terminal 2 est un terminal bancaire de paiement POS, conforme à ceux actuellement sur le marché. Il comprend une structure sécurisée et des fonctions homologuées / standardisées EMV (Europay Mastercard Visa), qui est le standard international des transactions de paiement sécurisées. Le POS peut être doté notamment d'un lecteur de carte à contact 3 (ou sans-contact), et d'interface (s) homme / machine tels que clavier 2C, écran 2E ainsi que de moyens de communication sans-contact notamment NFC (Near Field Communication - radiofréquence de proximité) avec un téléphone intelligent 4 ou une carte sans-contact.

Dans l'exemple figure 1, le terminal 2 comprend une interface à contacts électriques pour échanger 15 avec la carte via un bornier de contacts électriques ou module à contacts M3 (intégré). L'interface (bornier ou antenne NFC) peut permettre aussi d'alimenter les circuits du dispositif 3 en énergie.

Le terminal 2 peut être doté de préférence d'un module de sécurité à puce électronique SAM et des moyens électroniques chiffrés pour communiquer avec un serveur central bancaire (notamment pour une collecte périodique des informations de transaction et/ou de mise à jour, ou pour une validation online en temps réel), ou un serveur de (ou pour) marchands.

Alternativement, le dispositif de transaction électronique 3, quant à lui, peut constituer ou comprendre tout dispositif de paiement avec des applications bancaires de paiement, ou pouvant simuler / émuler des cartes bancaires (par exemple montre intelligente, badge, bracelet porte-monnaie électronique...).

Le dispositif 3 peut être sous forme de carte mais aussi alternativement sous forme de téléphone intelligent. Le téléphone peut comprendre une fonction d'émulation carte sans-contact selon le standard ISO 14443 et/ou ISO/IEC 18092 de manière à communiquer directement avec le terminal 2 (POS) en étant perçu par lui comme une carte à puce ou un « device » de paiement.

Le dispositif 3 peut intégrer également des circuits électroniques ou des puces à circuit intégré. Il peut intégrer une interface homme / machine ici sous forme d'un écran tactile. Il peut intégrer des applications ou programmes de fonctionnement applicatifs, stockés en mémoire notamment EEPROM ou flash pour notamment effectuer des opérations bancaires, de fidélité ou autres. Ces programmes applicatifs peuvent être exécutés par une unité de traitement principal µC2, 13 ou dans un ou des circuits électroniques ou des puces électroniques à circuits intégrés associés tel un élément de sécurité électronique « eSE notamment dans un téléphone ou une montre ».

Le dispositif 3 peut intégrer une fonction de réception des données de transaction du terminal 2. Il peut intégrer une interface NFC pour recevoir des données de transaction émises également en mode radiofréquence NFC.

Selon une caractéristique du mode préféré, le procédé comprend l'étape selon lesquelles lesdites informations de transaction communiquées à l'adaptateur 4 sont obtenues ou collectées dans ou via ladite carte à puce 3 (ou autre dispositif personnel de transaction).

Selon une première implantation ou configuration matérielle et logicielle du dispositif de transaction 3 (tel que la carte), les informations de transaction 5 peuvent être dérivées en parallèle de celles 15 reçues par le dispositif à puce 3.

Par exemple, l'invention peut prévoir une puce espion supplémentaire 14 ou 34 qui est connectée en parallèle aux plots de communication de la puce de la carte. L'invention peut prévoir une puce électronique supplémentaire 14 ou 34, (connectée à l'élément de sécurité SE, 13 ou EMV), qui est configurée pour communiquer les informations nécessaires à l'utilisateur, extraites de la transaction en cours.

Alternativement, les informations de transaction 5 peuvent être traitées ou sélectionnées par la puce applicative 13 du dispositif de transaction à puce. Cette même puce 13 peut transmettre ces informations 5 à une autre puce (ou microcontrôleur) 14 chargée de transmettre à l'extérieur notamment l'adaptateur 4 via une interface de communication appropriée non représentée).

La carte peut être agencée ou configurée ou équipée avec une interface de communication radiofréquence parmi Bluetooth, WIFI, UHF, NFC, LIFI, infrarouge, optique pour transmettre ou communiquer lesdites informations à l'adaptateur 4. Cette interface peut appartenir ou être reliée à un microcontrôleur 14 correspondant notamment BLE. Cette interface peut appartenir à la puce 13.

Selon une caractéristique, l'adaptateur 4 peut comprendre un téléphone mobile 4 ou une oreillette sans fil 24 dotée d'une interface de communication adaptée à celle de l'interface de communication du dispositif de transaction personnel 3.

L'adaptateur 4 peut comprendre de préférence une application logicielle 41 configurée pour traduire ou transposer des informations numériques ou analogiques 5 (reçues de la carte notamment par toute communication notamment BLE) en informations vocales ou autre sur une interface homme / machine et inversement.

Selon un mode préféré, l'adaptateur 4 peut être similaire au téléphone intelligent décrit ci-dessus. Il peut en outre être configuré pour échanger avec la carte à puce 3 ou une carte à puce interne émulée dans le téléphone.

L'adaptateur peut comprendre un téléphone mobile 4, une oreillette sans fil 24 dotée d'une interface de communication adaptée à celle de l'interface de communication du dispositif à puce 3.

L'application bancaire NFC du dispositif 3 (ce dernier pouvant être notamment sous forme de téléphone portable, montre intelligente...) peut être configurée pour extraire des données de la transaction et les transmettre sous forme audio à l'utilisateur notamment via une oreillette Bluetooth 24 (ou casque filaire ou sans fil 34) connecté sur le dispositif 3.

### Description de modes particuliers de réalisation.

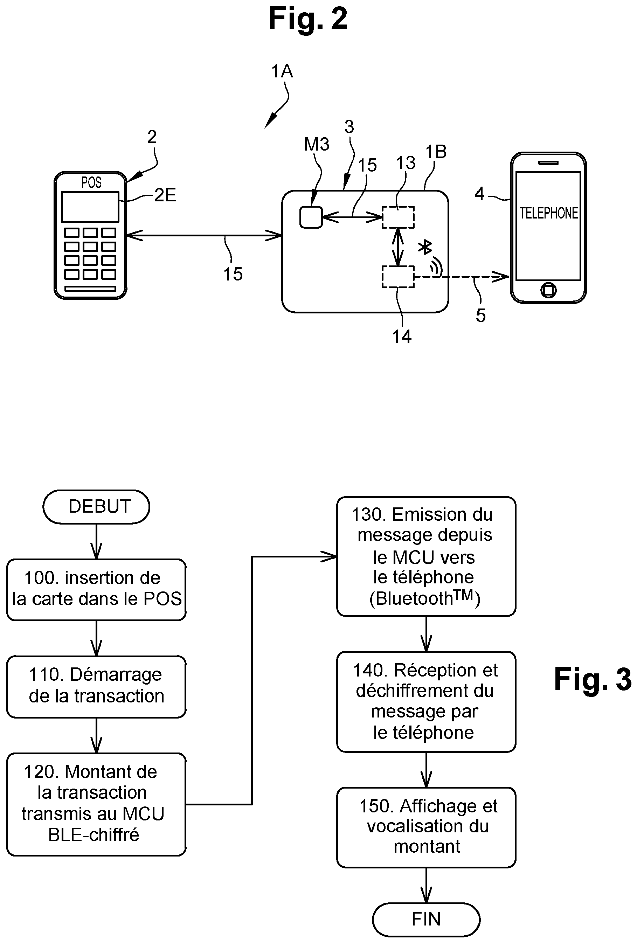

A la figure 2, le système comprend une carte ayant une puce applicative 13 notamment bancaire EMV connectée à une interface de communication à contacts M3. L'interface peut être aussi une interface à antenne radiofréquence (non représentée. L'interface de la carte M3 est configurée pour établir une communication 15 avec le terminal 2. La communication peut être radiofréquence de proximité NFC ou une communication par contacts électriques. (L'interface NFC ou à contact est intégrée dans le dispositif ou carte).

La puce applicative 13 selon ce mode peut être reliée à un microcontrôleur MCU 14 ayant une interface de communication radiofréquence de moyenne portée. Par exemple, cette dernière interface peut être une interface BLE (Bluetooth^{™} Low Energy en terminologie anglo-saxonne).

Le microcontrôleur 14 est configuré pour recevoir des informations de transactions transmises par la puce applicative 13. Cette dernière peut être configurée pour sélectionner des informations de transactions minimales qui lui parviennent via le terminal 2 telles que celles qui sont normalement affichées sur l'écran du terminal 2E.

A la figure 3 sont illustrées des étapes relatives au fonctionnement du système 1B de la figure précédente. Un utilisateur désireux d'effectuer un achat chez un marchand, présente ou introduit uniquement (étape 100) sa carte bancaire (présente sa montre...) au terminal 2. Dans l'exemple, Figure 3, la carte est insérée dans le terminal POS. Puis à l'étape 110, la transaction de paiement d'un article achetée débute avec des échanges classiques conformes à des standards de paiement notamment EMV entre le terminal 2 et la puce applicative 13. A l'étape 120, le montant de la transaction est transmis au microcontrôleur 14 MCU BLE. Cette transmission peut être sécurisée et/ou le montant peut être de préférence chiffré. Puis, à l'étape 130, le MCU 14 procède à l'émission d'un message 5 contenant tout ou partie des informations reçues vers l'adaptateur 4, ici un téléphone portable.

A l'étape 140, le téléphone 140 via une application dédiée, procède à la réception et déchiffrement du message 5 provenant de la carte 3. Puis, à l'étape 150, le téléphone procède à l'affichage et / ou vocalisation du message reçu déchiffré. Le cas échéant, l'utilisateur à branché un casque audio sur son téléphone et peut recevoir le message audio dans son casque.

Alternativement, l'utilisateur peut disposer d'une oreillette appariée avec son téléphone pour recevoir le message reçu par son téléphone (adaptateur). Alternativement, l'utilisateur peut disposer d'une oreillette qui est configurée pour recevoir directement le message émis par la carte via le microcontrôleur MCU 14.

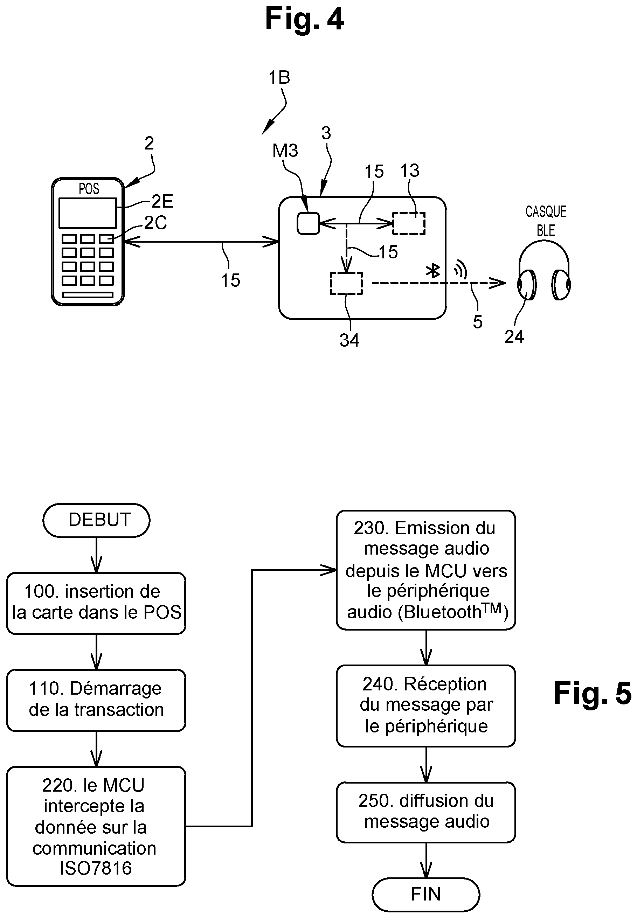

A la figure 4, le système 1B diffère du précédent en ce le microcontrôleur 14 est configuré de manière à espionner les informations 15 échangées entre la puce 13 et le terminal 2 et en ce que l'adaptateur 4 comprend ou est constitué par un périphérique audio 24 tel qu'une oreillette (ou un casque audio).

Pour espionner, le microcontrôleur 14 peut être branché en parallèle sur l'interface à contact ou sans contact M3 par exemple. L'oreillette ou le casque 24 peut avoir les fonctions décrites précédemment en relation avec le téléphone 4. L'adaptateur de ce mode peut donc comprendre tout ou partie des fonctions ou moyens matériels et logiciel du téléphone 4

A la figure 5 sont illustrées des étapes relatives au fonctionnement du système 1B de la figure 4. Les étapes 100 à 110 sont identiques à celles du système précédent 1B. A l'étape 220. Le MCU 34 intercepte les échanges 15 sur la communication ISO 7816 entre le terminal et la puce applicative 13 notamment EMV et il est configuré pour transformer le message 5 capté (éventuellement trié) en signal audio à destination d'un périphérique audio 24. Alternativement, le MCU 34, retransmet le message numérique au périphérique et ce dernier le transforme en fichier audio et le diffuse à l'utilisateur.

Le MCU 14 peut être configuré ou paramétré pour extraire uniquement certaines (5) ou la totalité (15) des informations échangées telles que le montant, le type de paiement comptent ou à crédit .... Par exemple, des indicateurs de contenu du message sont détectés par le MCU 34 pour extraire les informations requises par l'utilisateur. Le MCU 14 peut notamment être configuré ou paramétré pour écouter l'ensemble de la communication qui circule sur le canal ISO 7816, et en extraire les données requises par l'utilisateur.

Puis à l'étape 230, le système 1B procède à l'émission du message audio depuis le MCU 34 vers le périphérique audio (selon un protocole de communication courte ou moyenne portée notamment Bluetooth ^{™} faible énergie BLE).

Puis à l'étape 240, le périphérique audio 24 procède à la réception du message (5 ou 15) pour le diffuser dans la foulée (250) à l'utilisateur.

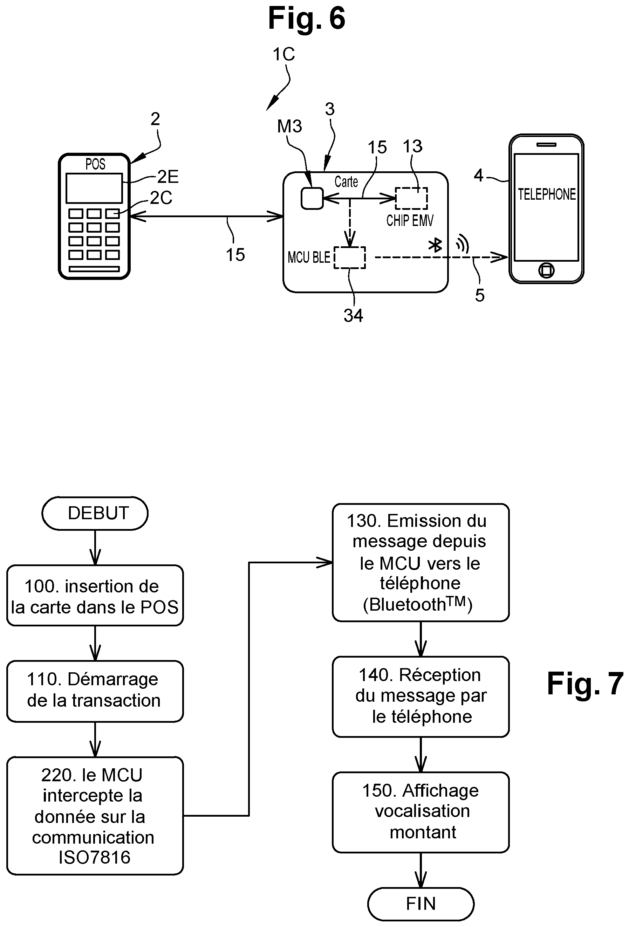

A la figure 6, le système 1C est similaire à celui de la figure 2. Il diffère simplement par le MCU. Le MCU 34 ici distinct du MCU 14 est configuré pour espionner et extraire tout ou partie des informations échangées entre le terminal et la puce applicative 13 comme au système 1B de la figure 4. Le système 1C diffère aussi en ce que les données numériques ou informations 5, 15 espionnées peuvent être reçues par le téléphone 4 et peuvent être transformées en information audio par le téléphone.

Alternativement exprimé, le système 1C (fig. 6) peut différer du système 1B (Fig. 4) uniquement par l'adaptateur 4. Le système 1C comprend un casque audio connecté directement au dispositif de transaction 3 notamment par BLE, ou wifi ou tout autre protocole de communication.

A la figure 7 sont illustrées des étapes relatives au fonctionnement du système 1C de la figure précédente.

Les étapes 100 et 110 sont identiques à celles de la figure 3. Puis l'étape 220 est identique à celle de la figure 2 dans laquelle le MCU 34 intercepte les données par espionnage de la communication 15 entre le terminal 2 et la puce applicative 13.

Ensuite, les étapes 130 à 150 peuvent être identiques à celles de la figure 3 dans lesquelles, le message (chiffré ou non) émis par la carte en BLE et reçu par l'adaptateur (téléphone) est affiché et/ou vocalisé (transformé par ce dernier en signal audio).

A cet effet, dans tous les exemples, le MCU 14, 34 ou l'adaptateur 4, 24 peut comprendre une application configurée pour transformer un fichier contenant un message numérique en fichier audio. Le fichier audio peut être ensuite transformé en signal audible par l'utilisateur sur un haut-parleur de l'adaptateur 4 ou oreillette ou casque audio 24.

## Revendications

1. Procédé pour réaliser une transaction avec un système (1, 1A, 1B, 1C) comprenant un terminal (2) et un dispositif à puce (3), ledit système étant configuré pour communiquer à un utilisateur (6), pendant ladite transaction, des informations de transaction provenant du terminal par l'intermédiaire d'un adaptateur (4), ledit adaptateur étant configuré pour recevoir, avec ou sans fil, lesdites informations (5) et les diffuser à l'utilisateur sous forme vocale ou autre,
lesdites informations étant obtenues ou collectées dans ledit dispositif à puce (3),
**caractérisé en ce que** le terminal est un terminal de transaction bancaire, **en ce que** ledit dispositif à puce (3) est configuré avec une première interface de communication à contacts électriques (M3) ou radiofréquence de proximité comprise dans le dispositif pour recevoir les informations de la transaction directement d'une interface de communication du terminal, **en ce que** ledit dispositif à puce (3) est configuré avec une seconde interface de communication sans-fil (14, 34) intégrée pour communiquer lesdites informations à l'adaptateur, **en ce que** la seconde interface de communication appartient ou est reliée à un microcontrôleur (34) correspondant du dispositif à puce , **en ce que** le
microcontrôleur espionne les informations de transaction échangées entre le terminal et la puce, **en ce que** le microcontrôleur extrait tout ou partie des informations de transaction espionnées, et **en ce que** le microcontrôleur transmet les informations extraites à l'adaptateur au moyen de la seconde interface de communication.

2. Procédé selon la revendication 1, **caractérisé en ce que** le microcontrôleur transforme les informations extraites en un fichier audio avant de les transmettre à l'adaptateur sous la forme du fichier audio.

3. Procédé selon la revendication 1, **caractérisé en ce que** l'adaptateur transforme en fichier audio les informations reçues du microcontrôleur.

4. Procédé selon l'une des revendications précédentes, **caractérisé en ce que** ladite première interface du dispositif (3) est conforme au standard ISO 7816 (M3) ou ISO 14443 et/ou ISO/IEC 18092.

5. Procédé selon l'une des revendications précédentes, **caractérisé en ce que** ladite seconde interface de communication sans fil (14, 34) est choisie parmi Bluetooth, WIFI, UHF, NFC, LIFI.

6. Procédé selon la revendication précédente, caractérisé en en ce qu'il comprend l'étape selon laquelle, pour réaliser la transaction, le dispositif est présenté seul au terminal ou inséré seul dans ledit terminal (2).

7. Procédé selon la revendication précédente, **caractérisé en ce que** le microcontrôleur est branché en parallèle sur la première interface de communication.

8. Procédé selon l'une des revendications précédentes, **caractérisé en ce que** ledit adaptateur comprend un téléphone mobile, une oreillette sans fil dotée d'une interface de communication adaptée à celle de l'interface de communication de la carte.

9. Procédé selon l'une des revendications précédentes, **caractérisé en ce que** ledit adaptateur (4) est choisi parmi un dispositif de l'utilisateur parmi un téléphone portable, une tablette, un assistant personnel, un accessoire électronique à porter, une montre communicante ou NFC.

10. Procédé selon l'une des revendications précédentes, **caractérisé en ce que** le lecteur comprend un lecteur POS ou terminal bancaire ATM.

11. Procédé selon l'une des revendications précédentes, **caractérisé en ce que** ledit adaptateur comprend une application logicielle configurée pour traduire ou transposer des informations numériques ou analogiques en informations vocales ou autre sur une interface homme / machine et inversement.

12. Système pour réaliser une transaction , 1e système (1, 1A, 1B, 1C) comprenant un terminal (2) et un dispositif à puce (3), ledit système étant configuré pour communiquer à un utilisateur (6), pendant ladite transaction, des informations de transaction provenant du terminal par l'intermédiaire d'un adaptateur (4), ledit adaptateur étant configuré pour recevoir, avec ou sans fil, lesdites informations (5) et les diffuser à l'utilisateur sous forme vocale ou autre,
lesdites informations étant obtenues ou collectées dans ledit dispositif à puce (3),
**caractérisé en ce que** le terminal est un terminal de transaction bancaire, **en ce que** ledit dispositif à puce (3) est configuré avec une première interface de communication à contacts électriques (M3) ou radiofréquence de proximité comprise dans le dispositif pour recevoir les informations de la transaction directement d'une interface de communication du terminal, ledit dispositif à puce (3) étant configuré avec une seconde interface de communication sans-fil (14, 34) intégrée pour communiquer lesdites informations à l'adaptateur, **en ce que** la seconde interface de communication appartient ou est reliée à un microcontrôleur (34) correspondant du dispositif à puce , **en ce que** le microcontrôleur est configuré pour espionner les informations de transaction échangées entre le terminal et la puce, **en ce que** le microcontrôleur est configuré pour extraire tout ou partie des informations de transaction espionnées, et **en ce que** le microcontrôleur est configuré pour transmettre les informations extraites à l'adaptateur au moyen de la seconde interface de communication.

13. Système selon la revendication 12, **caractérisé en ce que** le microcontrôleur est configuré pour transformer les informations extraites en un fichier audio avant de les transmettre à l'adaptateur sous la forme du fichier audio.

14. Système selon la revendication 1, **caractérisé en ce que** l'adaptateur est configuré pour transformer en fichier audio les informations reçues du microcontrôleur.

15. Dispositif à puce (3) pour réaliser une transaction avec un terminal (2) de transaction bancaire, ledit dispositif à puce étant configuré pour communiquer à un utilisateur (6), pendant ladite transaction, des informations de transaction provenant du terminal par l'intermédiaire d'un adaptateur (4), ledit adaptateur étant configuré pour recevoir, avec ou sans fil, lesdites informations (5) et les diffuser à l'utilisateur sous forme vocale ou autre, lesdites informations étant obtenues ou collectées dans ledit dispositif à puce (3),
**caractérisé en ce que** ledit dispositif à puce (3) est configuré avec une première interface de communication à contacts électriques (M3) ou radiofréquence de proximité comprise dans le dispositif pour recevoir les informations de la transaction directement d'une interface de communication du terminal, **en ce que** ledit dispositif à puce (3) est configuré avec une seconde interface de communication sans-fil (34) intégrée pour communiquer lesdites informations à l'adaptateur, **en ce que** la seconde interface de communication appartient ou est reliée à un microcontrôleur (34) correspondant du dispositif à puce , **en ce que** le
microcontrôleur est configuré pour espionner les informations de transaction échangées entre le terminal et la puce, **en ce que** le microcontrôleur est configuré pour extraire tout ou partie des informations de transaction espionnées, et **en ce que** le microcontrôleur est configuré pour transmettre les informations extraites à l'adaptateur au moyen de la seconde interface de communication.

## Patentansprüche

1. Verfahren zum Realisieren einer Transaktion mit einem System (1, 1A, 1B, 1C), umfassend ein Endgerät (2) und eine Chipvorrichtung (3), wobei das System zum Kommunizieren an einen Benutzer (6), während der Transaktion, von Transaktionsinformationen, die aus einem Endgerät stammen, über einen Adapter (4) konfiguriert ist, wobei der Adapter zum Empfangen, drahtgebunden oder drahtlos, der Informationen (5) und zum Ausgeben dieser in sprachlicher oder anderer Form an den Benutzer konfiguriert ist,
wobei die Informationen in der Chipvorrichtung (3) erhalten oder gesammelt werden,
**dadurch gekennzeichnet, dass** das Endgerät ein Banktransaktionsendgerät ist, **dadurch, dass** die Chipvorrichtung (3) mit einer ersten Kommunikationsschnittstelle mit elektrischen Kontakten (M3) oder einer Nahbereichs-Hochfrequenz, die in der Vorrichtung umfasst ist, zum Empfangen der Informationen der Transaktion direkt von einer Kommunikationsschnittstelle des Endgeräts, konfiguriert ist, **dadurch, dass** die Chipvorrichtung (3) mit einer zweiten integrierten drahtlosen Kommunikationsschnittstelle (14, 34) zum Kommunizieren der Informationen an den Adapter konfiguriert ist, **dadurch, dass** die zweite Kommunikationsschnittstelle zu einer entsprechenden Mikrosteuerung (34) der Chipvorrichtung gehört oder mit dieser verbunden ist, **dadurch, dass** die Mikrosteuerung die zwischen dem Endgerät und dem Chip ausgetauschten Transaktionsinformationen ausspäht, **dadurch, dass** die Mikrosteuerung die ausgespähten Transaktionsinformationen ganz oder teilweise extrahiert, **und dadurch, dass** die Mikrosteuerung die extrahierten Informationen an den Adapter mittels der zweiten Kommunikationsschnittstelle überträgt.

2. Verfahren nach Anspruch 1, **dadurch gekennzeichnet, dass** die Mikrosteuerung die extrahierten Informationen in eine Audiodatei umwandelt, bevor sie sie in Form der Audiodatei an den Adapter überträgt.

3. Verfahren nach Anspruch 1, **dadurch gekennzeichnet, dass** der Adapter die von der Mikrosteuerung empfangenen Informationen in eine Audiodatei umwandelt.

4. Verfahren nach einem der vorstehenden Ansprüche,
**dadurch gekennzeichnet, dass** die erste Schnittstelle der Vorrichtung (3) mit dem Standard ISO 7816 (M3) oder ISO 14443 und/oder ISO/IEC 18092 konform ist.

5. Verfahren nach einem der vorstehenden Ansprüche,
**dadurch gekennzeichnet, dass** die zweite drahtlose Kommunikationsschnittstelle (14, 34) aus Bluetooth, WIFI, UHF, NFC, LIFI ausgewählt ist.

6. Verfahren nach dem vorstehenden Anspruch,
**dadurch gekennzeichnet, dass** es den Schritt umfasst, gemäß diesem, zum Realisieren der Transaktion, die Vorrichtung allein dem Endgerät vorgelegt oder allein in das Endgerät (2) eingeführt wird.

7. Verfahren nach dem vorstehenden Anspruch,
**dadurch gekennzeichnet, dass** die Mikrosteuerung an die erste Kommunikationsschnittstelle parallel verzweigt ist.

8. Verfahren nach einem der vorstehenden Ansprüche,
**dadurch gekennzeichnet, dass** der Adapter ein Mobiltelefon, einen drahtlosen Ohrhörer, der mit einer Kommunikationsschnittstelle ausgestattet ist, die an die der Kommunikationsschnittstelle der Karte angepasst ist, umfasst.

9. Verfahren nach einem der vorstehenden Ansprüche,
**dadurch gekennzeichnet, dass** der Adapter (4) aus einer Vorrichtung des Benutzers aus einem Mobiltelefon, einem Tablet, einem persönlichen Assistenten, einem tragbaren elektronischen Zubehör, einer kommunizierenden Uhr oder NFC ausgewählt ist.

10. Verfahren nach einem der vorstehenden Ansprüche,
**dadurch gekennzeichnet, dass** der Leser einen POS-Leser oder einen ATM-Geldautomaten umfasst.

11. Verfahren nach einem der vorstehenden Ansprüche,
**dadurch gekennzeichnet, dass** der Adapter eine Softwareanwendung umfasst, die zum Übersetzen oder Umsetzen von digitalen oder analogen Informationen in Sprach- oder andere Informationen auf einer Mensch-Maschine-Schnittstelle und umgekehrt konfiguriert ist.

12. System zum Realisieren einer Transaktion, das System (1, 1A, 1B, 1C) umfassend ein Endgerät (2) und eine Chipvorrichtung (3), wobei das System zum Kommunizieren an einen Benutzer (6), während der Transaktion, von Transaktionsinformationen, die aus einem Endgerät stammen, über einen Adapter (4) konfiguriert ist, wobei der Adapter zum Empfangen, drahtgebunden oder drahtlos, der Informationen (5) und zum Ausgeben dieser in sprachlicher oder anderer Form an den Benutzer, konfiguriert ist,
wobei die Informationen in der Chipvorrichtung (3) erhalten oder erfasst werden,
**dadurch gekennzeichnet, dass** das Endgerät ein Banktransaktionsendgerät ist, **dadurch, dass** die Chipvorrichtung (3) mit einer ersten Kommunikationsschnittstelle mit elektrischen Kontakten (M3) oder einer Nahbereichs-Hochfrequenz, die in der Vorrichtung umfasst ist, zum Empfangen der Informationen der Transaktion direkt von einer Kommunikationsschnittstelle des Endgeräts, konfiguriert ist, wobei die Chipvorrichtung (3) mit einer zweiten integrierten drahtlosen Kommunikationsschnittstelle (14, 34) zum Kommunizieren der Informationen an den Adapter konfiguriert ist, **dadurch, dass** die zweite Kommunikationsschnittstelle zu einer entsprechenden Mikrosteuerung (34) der Chipvorrichtung gehört oder mit dieser verbunden ist, **dadurch, dass** die Mikrosteuerung zum Ausspähen der zwischen dem Endgerät und dem Chip ausgetauschten Transaktionsinformationen konfiguriert ist, **dadurch, dass** die Mikrosteuerung zum Extrahieren aller oder eines Teils der ausgespähten Transaktionsinformationen konfiguriert ist, **und dadurch, dass,** die Mikrosteuerung zum Übertragen der extrahierten Informationen an den Adapter mittels der zweiten Kommunikationsschnittstelle konfiguriert ist.

13. System nach Anspruch 12, **dadurch gekennzeichnet, dass** die Mikrosteuerung zum Umwandeln der extrahierten Informationen in eine Audiodatei, bevor sie sie in Form der Audiodatei an den Adapter überträgt, konfiguriert ist.

14. System nach Anspruch 1, **dadurch gekennzeichnet, dass** der Adapter zum Umwandeln in eine Audiodatei der empfangenen Informationen der Mikrosteuerung konfiguriert ist.

15. Chipvorrichtung (3) zum Realisieren einer Transaktion mit einem Banktransaktionsendgerät (2), wobei die Chipvorrichtung zum Kommunizieren an einen Benutzer (6), während der Transaktion, von Transaktionsinformationen, die aus einem Endgerät stammen, über einen Adapter (4) konfiguriert ist, wobei der Adapter zum Empfangen, drahtgebunden oder drahtlos, der Informationen (5) und zum Ausgeben dieser in sprachlicher oder anderer Form an den Benutzer konfiguriert ist, wobei die Informationen in der Chipvorrichtung (3) erhalten oder gesammelt werden,
**dadurch gekennzeichnet, dass** die Chipvorrichtung (3) mit einer ersten Kommunikationsschnittstelle mit elektrischen Kontakten (M3) oder einer Nahbereichs-Hochfrequenz, die in der Vorrichtung umfasst ist, zum Empfangen der Informationen der Transaktion direkt von einer Kommunikationsschnittstelle des Endgeräts, konfiguriert ist, **dadurch, dass** die Chipvorrichtung (3) mit einer zweiten integrierten drahtlosen Kommunikationsschnittstelle (14, 34) zum Kommunizieren der Informationen an den Adapter konfiguriert ist,
**dadurch, dass** die zweite Kommunikationsschnittstelle zu einer entsprechenden Mikrosteuerung (34) der Chipvorrichtung gehört oder mit dieser verbunden ist, **dadurch, dass** die Mikrosteuerung zum Ausspähen der zwischen dem Endgerät und dem Chip ausgetauschten Transaktionsinformationen konfiguriert ist, **dadurch, dass** die Mikrosteuerung zum Extrahieren aller oder eines Teils der ausgespähten Transaktionsinformationen konfiguriert ist, **und dadurch, dass,** die Mikrosteuerung zum Übertragen der extrahierten Informationen an den Adapter mittels der zweiten Kommunikationsschnittstelle konfiguriert ist.

## Claims

1. Method for performing a transaction with a system (1, 1A, 1B, 1C) comprising a terminal (2) and a chip device (3), said system being configured to communicate to a user (6), during said transaction, transaction information from the terminal via an adapter (4), said adapter being configured to receive, by wire or wirelessly, said information (5) and to broadcast it to the user in voice form or another form,
said information being obtained or collected in said chip device (3),
**characterized in that** the terminal is a banking transaction terminal, **in that** said chip device (3) is configured with a near-field communication or electrical contacts first communication interface (M3) included in the device, for receiving the information about the transaction directly from a communication interface of the terminal, **in that** said chip device (3) is configured with an integrated wireless second communication interface (14, 34) for communicating said information to the adapter, **in that** the second communication interface belongs to or is connected to a corresponding microcontroller (34) of the chip device, **in that** the microcontroller tracks the transaction information exchanged between the terminal and the chip, **in that** the microcontroller extracts all or part of the tracked transaction information, and **in that** the microcontroller transmits the extracted information to the adapter by means of the second communication interface.

2. Method according to claim 1, **characterized in that** the microcontroller transforms the extracted information into an audio file before transmitting said information to the adapter in the form of the audio file.

3. Method according to claim 1, **characterized in that** the adapter transforms the information received from the microcontroller into an audio file.

4. Method according to any of the preceding claims, **characterized in that** said first interface of the device (3) complies with ISO standard 7816 (M3) or ISO standard 14443 and/or ISO/IEC 18092.

5. Method according to any of the preceding claims, **characterized in that** said wireless second communication interface (14, 34) is selected from Bluetooth, Wi-Fi, UHF, NFC, Li-Fi.

6. Method according to the preceding claim, **characterized in that** it comprises the step whereby, in order to perform the transaction, the device is presented alone to the terminal or inserted alone into said terminal (2).

7. Method according to the preceding claim, **characterized in that** the microcontroller is connected in parallel to the first communication interface.

8. Method according to any of the preceding claims, **characterized in that** said adapter comprises a mobile phone, a wireless earpiece provided with a communication interface adapted to that of the communication interface of the card.

9. Method according to any of the preceding claims, **characterized in that** said adapter (4) is selected from a user device from a cell phone, a tablet, a personal assistant, a wearable electronic accessory, a smart or NFC watch.

10. Method according to any of the preceding claims, **characterized in that** the reader comprises a POS reader or ATM banking terminal.

11. Method according to any of the preceding claims, **characterized in that** said adapter comprises a software application configured to translate or transpose digital or analog information into voice information or another type of information on a human-machine interface and vice versa.

12. System for performing a transaction, the system (1, 1A, 1B, 1C) comprising a terminal (2) and a chip device (3), said system being configured to communicate to a user (6), during said transaction, transaction information from the terminal via an adapter (4), said adapter being configured to receive, by wire or wirelessly, said information (5) and to broadcast it to the user in voice form or another form,
said information being obtained or collected in said chip device (3),
**characterized in that** the terminal is a banking transaction terminal, **in that** said chip device (3) is configured with a near-field communication or electrical contacts first communication interface (M3) included in the device, for receiving the information about the transaction directly from a communication interface of the terminal, said chip device (3) being configured with an integrated wireless second communication interface (14, 34) for communicating said information to the adapter, **in that** the second communication interface belongs to or is connected to a corresponding microcontroller (34) of the chip device, **in that** the microcontroller is configured to track the transaction information exchanged between the terminal and the chip, **in that** the microcontroller is configured to extract all or part of the tracked transaction information, and **in that** the microcontroller is configured to transmit the extracted information to the adapter by means of the second communication interface.

13. System according to claim 12, **characterized in that** the microcontroller is configured to transform the extracted information into an audio file before transmitting said information to the adapter in the form of the audio file.

14. System according to claim 1, **characterized in that** the adapter is configured to transform the information received from the microcontroller into an audio file.

15. Chip device (3) for performing a transaction with a banking transaction terminal (2), said chip device being configured to communicate to a user (6), during said transaction, transaction information from the terminal via an adapter (4), said adapter being configured to receive, by wire or wirelessly, said information (5) and to broadcast it to the user in voice form or another form, said information being obtained or collected in said chip device (3),
**characterized in that** said chip device (3) is configured with a near-field communication or electrical contacts first communication interface (M3) included in the device, for receiving the information about the transaction directly from a communication interface of the terminal, **in that** said chip device (3) is configured with an integrated wireless second communication interface (34) for communicating said information to the adapter, **in that** the second communication interface belongs to or is connected to a corresponding microcontroller (34) of the chip device, **in that** the microcontroller is configured to track the transaction information exchanged between the terminal and the chip, **in that** the microcontroller is configured to extract all or part of the tracked transaction information, and **in that** the microcontroller is configured to transmit the extracted information to the adapter by means of the second communication interface.
